# EUROPÄISCHE PATENTSCHRIFT

(11) **EP 2 311 675 B1**
(45) Veröffentlichungstag und Bekanntmachung des Hinweises auf die Patenterteilung: **11.12.2013**
(21) Anmeldenummer: 10187118.4
(22) Anmeldetag: 11.10.2010
(51) Int. Cl.: B60H 1/00

(54) **Klimaanlage**
Air conditioning device
Installation de climatisation

(30) Priorität: 14.10.2009 DE 102009049425
(43) Veröffentlichungstag der Anmeldung: 20.04.2011
(73) Patentinhaber: Behr GmbH & Co. KG, 70469 Stuttgart (DE)
(72) Erfinder: Bürkle, Rainer, 70736, Fellbach (DE); Schall, Matthias, 73760, Ostfildern-Ruit (DE)
(74) Vertreter: Grauel, Andreas

(56) Entgegenhaltungen:
- DE-A1- 19 741 862
- FR-A1- 2 531 666
- JP-A- 60 226 315
- US-A1- 2005 115 704

## Beschreibung

Die Erfindung betrifft eine Klimaanlage, insbesondere für ein Kraftfahrzeug, gemäß dem Oberbegriff des Anspruchs 1.

In Klimaanlagen, wie beispielsweise in Kraftfahrzeugklimaanlagen, können Betriebszustände auftreten, welche zu einem Kondenswasseraustritt aus dem Verdampfer führen. Dies kann z. B. durch starkes Beschleunigen oder Bremsen des Kraftfahrzeugs, einen sprunghaften Anstieg der Luftmenge oder sogar durch die Verdampferoberfläche kontaminierende oder verändernde Umwelteinflüsse verursacht werden. Problematisch ist eine derartige Situation dann, wenn das austretende Kondenswasser auf die Heizeinrichtung der Klimaanlage trifft. Dann besteht die Gefahr, dass das an der Heizeinrichtung verdampfende Kondenswasser zu einem Beschlagen der Fahrzeugscheiben - was insbesondere problematisch im Hinblick auf die Windschutzscheibe ist - und somit zu einer Sichtbehinderung führt.

Darüber hinaus werden im Rahmen der Hybridisierung von Kraftfahrzeugantrieben und bei überwiegend elektrisch angetriebenen Fahrzeugen bei aus dem Stand der Technik bekannten Konfigurationen durch Kühlflüssigkeit durchströmte Heizkörper durch elektrische Heizelemente, wie beispielsweise PTC-Heizelemente ersetzt. Um die nötige Heizleistung bei nicht zu hohen elektrischen Strömen zu erzielen, ist eine Anhebung der Versorgungsspannung über den heute im Kraftfahrzeugbetrieb üblichen Bereich von 12 bis 42 V notwendig. Man verlässt hier jedoch den sogenannten SELV-Bereich (Safety Extra Low Voltage, DIN VDE 100-410), bei dem keine besonderen Vorkehrungen bezüglich einer Berührung von spannungsführenden Teilen getroffen werden müssen. Daher ist auch eine Benetzung des Zuheizers mit Wasser im SELV Spannungsbereich als nicht so kritisch einzustufen. Bei einem höheren Spannungsniveau ist dies bei der Auslegung als möglicher Versagensfall mit aufzunehmen, falls von der Klimagerätearchitektur her nicht sichergestellt werden kann, dass möglicherweise aus dem Verdampfer austretendes Kondenswasser nicht den elektrischen Heizer benetzt.

Um dieser Problematik zu begegnen, ist beispielsweise aus DE 10 2004 030 672 A1 eine Heiz-Klimaanlage bekannt, bei welcher ein tropfenflugfreier zum Heiz-Wärmetauscher zugeführter Luftstrom realisiert wird. Die Heiz-Klimaanlage weist ein Luftführungsgehäuse, ein Gebläse, einen Kühl-Wärmetauscher, einen Lufteintrittskanal zum Kühl-Wärmetauscher, einen Heiz-Wärmetauscher und einen Lufteintrittskanal zum Heiz-Wärmetauscher auf, wobei der Lufteintrittskanal zum Heiz-Wärmetauscher, und ein den Heiz-Wärmetauscher umgehender Luftkanal dicht beieinander liegen, so dass die Luft in beider dieser Luftkanäle im Wesentlichen in die gleiche Richtung strömt. Der Kühl-Wärmetauscher und der Heiz-Wärmetauscher sind V-förmig zueinander angeordnet, dass diese mit jeweils einem ihrer Enden nahe beieinander liegen.

Eine weitere bekannte Klimaanlage ist in US 2005/0115704 offenbart.

Obwohl verschiedene geometrische Anordnungen der Komponenten der Klimaanlage im Luftströmungsweg in dieser Hinsicht im Stand der Technik bekannt sind, besteht der grundlegende Aufbau im Luftströmungsweg entlang der Achse der Fahrtrichtung des Kraftfahrzeugs jedoch in der Regel aus der folgenden Reihenfolge: Zuströmung zum Verdampfer, Verdampfer, Heizkörper. Trotz der sehr unterschiedlichen möglichen geometrischen Anordnungen von Heizkörper und Verdampfer, folgen alle aus dem Stand der Technik bekannten Geräte der obigen Grundstruktur, bei der die Verdampferaustrittseite in Richtung des Heizkörpers weist, wodurch die oben beschriebene Gefahr besteht, dass aus dem Verdampfer austretendes Kondenswasser den Heizkörper bzw. einen elektrischen Zuheizer benetzt.

Die aus dem Stand der Technik bekannten Lösungen, um diese Gefahr zu minimieren oder zu vermeiden, erfordern spezielle Bauräume oder besondere geometrische Relationen zwischen Verdampfer und Heizkörper, was die Komplexität und somit die Kosten negativ beeinflusst.

Ein weiteres Problem bei den aus dem Stand der Technik bekannten Anordnungen beruht darauf, dass der Verdampfer in einer Klimaanlage technisch bedingt Luft nur auf Temperaturen knapp oberhalb von 0 °C abkühlen kann. Bei tieferen Lufttemperaturen würde das im Verdampfer abgeschiedene Kondenswasser gefrieren und den Verdampfer luftseitig verschließen. Deshalb wird der Kältekreislauf spätestens bei Außentemperaturen von kleiner als 0 °C abgeschaltet. Der Verdampfer ist dann ohne Funktion. In einem Temperaturbereich oberhalb von 0 °C (typischerweise in einem Bereich von 0 - 15 °C) ist ein Verdampferbetrieb zur Aufrechterhaltung einer konstanten Kraftfahrzeuginnenraumtemperatur nicht immer notwendig. Er wird jedoch zur Entfeuchtung der in den Kraftfahrzeuginnenraum eingebrachten Luft verwendet, Diese Maßnahme verhindert wirkungsvoll ein Beschlagen der Fahrzeugscheiben und trägt damit wesentlich zu einer erhöhten Verkehrssicherheit des Kraftfahrzeugs bei. Im Heizbetrieb unter 0 °C ist - wie oben beschrieben - der Verdampfer ohne Funktion; er verursacht im Luftweg der Klimaanlage dabei nur noch einen zusätzlichen luftseitigen Druckabfall, der zu Überwinden ist. Dies zeigt sich entweder in einer reduzierten Luftmenge im Heizbetrieb und/oder einer erhöhten Stromaufnahme bzw. Leistungsabgabe des Gebläses, was oft mit einer Verschlechterung der Akustik verbunden ist.

Um diese Problematik zu lösen, sind Klimaanlagen im Stand der Technik bekannt, die statt einer Reihenschaltung des Verdampfers und der Heizeinrichtung eine Parallelschaltung von Verdampfer und Heizeinrichtung vorschlagen.

Beispielsweise wird in EP 1 568 523 B1 eine Bauordnung für eine Vorrichtung zum Austausch von Wärme mit einem Gehäuse vorgeschlagen, in welchem ein gasförmiges Medium wenigstens teilweise auf einem vorbestimmten Pfad geführt wird. Um Leistungsverluste zu verhindern, sind ein erster Wärmetauscher und ein zweiter Wärmetauscher parallel zueinander angeordnet. Innerhalb des Gehäuses sind Regeleinrichtungen derart angeordnet, dass der Luftstrom entweder durch den ersten Wärmetauscher oder den zweiten Wärmetauscher geführt wird, um zum Fahrzeuginnenraum zu gelangen.

Hierbei wird zwar im Heizbetrieb eine Umgehung des Verdampfers und damit ein reduzierter Druckabfall im Heizmodus ermöglicht, jedoch ist nachteilig, dass eine vollständige Entfeuchtung der Luft nicht mehr möglich ist, was wiederum die bereits oben beschriebenen Probleme verursacht, wenn Feuchtigkeit an die Heizeinrichtungen der Klimaanlage gelangt.

Besonders bei niedrigen Außentemperaturen, insbesondere bei Temperaturen unterhalb von 10 °C, wo oft hohe Luftmengen über die Heizeinrichtung strömen und nur geringe Luftmengen über den Verdampfer, kann hierbei keine ausreichende Entfeuchtung der in den Fahrzeuginnenraum eintretenden Luft gewährleistet werden, und damit besteht wiederum die Gefahr des Beschlagens der Fahrzeugscheiben.

EP 1 510 375 offenbart einen Bypass zum Umgehen des Verdampfers, welcher es ermöglicht, einen Luftstrom am Verdampfer vorbei zu der Heizeinrichtung zu führen. Nachteilig bei dieser Lösung ist jedoch, dass um einen Gewinn im luftseitigen Druckabfall zu erzielen, der Querschnitt des Bypass zumindest ähnlich groß sein sollte, wie der durchströmte Querschnitt der Heizeinrichtung. Dies benötigt zusätzlichen Bauraum im Klimagerät, welcher oft nicht vorhanden ist.

Daher ist es die Aufgabe der vorliegenden Erfindung, eine Klimaanlage für ein Kraftfahrzeug zur Verfügung zu stellen, bei welcher ohne das Erfordernis zusätzlichen Bauraums eine Konfiguration realisiert wird, bei der weder Druckverluste noch ein Benetzen der Heizeinrichtung mit Wasser auftreten.

Die Aufgabe der vorliegenden Erfindung wird durch eine Klimaanlage mit den Merkmalen gemäß Anspruch 1 gelöst. Vorteilhafte Weiterbildungen der vorliegenden Erfindung sind in den Unteransprüchen definiert.

Erfindungsgemäß wird eine Klimaanlage, insbesondere für ein Kraftfahrzeug, bereitgestellt, welche ein Luftführungsgehäuse aufweist, in welchem zumindest ein Gebläse, ein Verdampfer und eine Heizeinrichtung angeordnet sind, wobei das Gebläse dem Verdampfer und/oder der Heizeinrichtung einen Luftstrom zuführt, wobei ein erster Luftströmungsweg zum Zuführen des Luftstroms zu dem Verdampfer und/oder der Heizeinrichtung zwischen dem Verdampfer und der Heizeinrichtung angeordnet ist. Dadurch, dass die Zuströmung des Luftstroms zu dem Verdampfer räumlich zwischen dem Verdampfer und der Heizeinrichtung liegt, wird einerseits das Vorsehen eines längeren Strömungswegs von einem Verdampferaustritt zu der Heizeinrichtung ermöglicht, wodurch eine ausreichende Entfeuchtung sichergestellt wird, da durch den längeren Strömungsweg möglicherweise aus dem Verdampfer austretendes Kondenswasser besser abgeschieden werden kann. Andererseits erlaubt es diese Konfiguration, den Verdampfer, wenn er nicht in Betrieb ist, zu umgehen, um so den luftseitigen Druckabfall zu reduzieren. Diese Lösung erfordert darüber hinaus keinen zusätzlichen Bauraum oder bestimmte Gehäusegeometrien.

Gemäß einer bevorzugten Ausführungsform ist der erste Luftströmungsweg an einem Luftaustritt des Gebläses angeordnet.

Gemäß noch einer bevorzugten Ausführungsform ist der erste Luftströmungsweg als Luftzuführkanal in dem Luftführungsgehäuse ausgebildet.

Gemäß noch einer weiteren bevorzugten Ausführungsform weist der Luftzuführkanal eine Wandung auf, welche zwischen dem Verdampfer und dem Heizeinrichtung angeordnet ist.

Vorzugsweise ist in der Wandung eine Öffnung vorgesehen,

Noch bevorzugter ist es, wenn in der Öffnung eine erste Klappe zum Öffnen und Verschließen der Öffnung angeordnet ist. Die erste Klappe, welche die Öffnung in der Wandung des Luftzuführkanals freigeben und schließen kann, ermöglicht sowohl eine Parallel- als auch eine Reihenschaltung von Verdampfer und Heizeinrichtung.

Gemäß einer weiteren bevorzugten Ausführungsform regelt die erste Klappe eine Reihenschaltung oder eine Parallelschaltung des Verdampfers und der Heizeinrichtung bezüglich des durch den ersten Luftströmungsweg zugeführten Luftstroms.

Gemäß noch einer weiteren bevorzugten Ausführungsform wird in der Reihenschaltung der Luftstrom von dem ersten Luftströmungsweg ausschließlich zu dem Verdampfer geleitet. Hinter dem Verdampfer wird die Luftströmung dann von einer oder mehreren Mischklappen entsprechend den Anforderungen (Solltemperatur) auf einen Kalt- und/oder Warmweg verteilt. In diesem Modus wird auch eine vollständige Entfeuchtung des Luftstroms sichergestellt. Bei Öffnen der Klappe wird aufgrund der Anordnung des ersten Luftströmungswegs zwischen dem Verdampfer und der Heizeinrichtung eine direkte Beaufschlagung der Heizeinrichtung unter Umgehung des Verdampfers ermöglicht.

Vorzugsweise leitet eine hinter dem Verdampfer angeordnete zweite Klappe den aus dem Verdampfer austretenden Luftstrom in einen Kaltluftkanal und/oder einen Warmluftkanal.

Es ist darüber hinaus bevorzugt, wenn die zweite Klappe als Mischklappe ausgebildet ist.

Gemäß einer weiteren bevorzugten Ausführungsform ist eine Luftaustrittsseite des Verdampfers durch die zweite Klappe verschließbar. Wenn die zweite Klappe die Luftaustrittsseite des Verdampfers verschließt, findet in diesem Fall keine Durchströmung des Verdampfers mehr statt.

Auch ist es besonders vorteilhaft, wenn ein zweiter Luftströmungsweg von der Luftaustrittsseite des Verdampfers zu der Heizeinrichtung unterhalb des Verdampfers angeordnet ist. Durch Anordnen des zweiten Luftströmungswegs von der Luftaustrittsseite des Verdampfers zu der Heizeinrichtung unterhalb des Verdampfers wird der Strömungsweg vorteilhaft verlängert, so dass eine bessere Abscheidung von möglicherweise in der Luftströmung mitgeführtem Kondenswasser erzielt wird.

Gemäß einer weiteren bevorzugten Ausführungsform kann ein dritter Luftströmungsweg von dem Luftaustritt des Verdampfers zu der Heizeinrichtung neben dem Verdampfer oder oberhalb des Verdampfers angeordnet sein. Auch diese Konfigurationen erzielen auf vorteilhafte Weise und ohne erhöhten Platzbedarf eine Verlängerung des Strömungswegs.

Vorzugsweise ist die Heizeinrichtung eine elektrische Heizeinrichtung, Darüber hinaus ist es bevorzugt, wenn die elektrische Heizeinrichtung zumindest ein PTC-Heizelement aufweist.

Im Folgenden wird die Erfindung anhand eines Ausführungsbeispiels unter Bezugnahme auf die Zeichnung detailliert erläutert. In der Zeichnung zeigen:
- Fig.1: eine schematische Schnittansicht eines Abschnitts eines Luftfüh- rungsgehäuses einer Klimaanlage gemäß einer Ausführungsform;
- Fig. 2: eine schematische Schnittansicht eines Abschnitts eines Luftfüh- rungsgehäuses einer Klimaanlage gemäß einer weiteren Ausfüh- rungsform ;
- Fig. 3: eine schematische Schnittansicht eines Abschnitts eines Luftfüh- rungsgehäuses einer Klimaanlage gemäß noch einer weiteren Aus- führungsform;
- Fig. 4: eine schematische Schnittansicht eines Abschnitts eines Luftfüh- rungsgehäuses einer Klimaanlage gemäß noch einer weiteren Aus- führungsform;

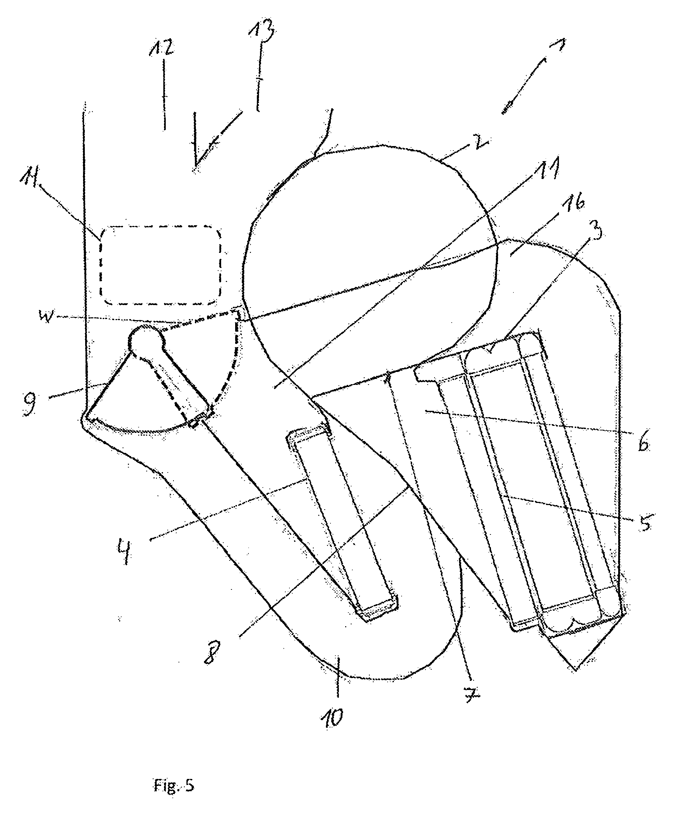

- Fig. 5: eine schematische Schnittansicht eines Abschnitts eines Luftfüh- rungsgehäuses einer Klimaanlage gemäß noch einer weiteren Aus- führungsform;
- Fig. 6: eine schematische Schnittansicht eines Abschnitts eines Luftfüh- rungsgehäuses einer Klimaanlage gemäß noch einer weiteren Aus- führungsform;
- Fig. 7: eine weitere schematische Schnittansicht des Abschnitts des Luft- führungsgehäuses der Klimaanlage von Fig. 6;
- Fig. 8: eine schematische Schnittansicht eines Abschnitts eines Luftfüh- rungsgehäuses einer Klimaanlage gemäß noch einer weiteren Aus- führungsform; und
- Fig. 9a, 9b, 9c: Jeweilige schematische Schnittansichten der in Fig. 8 darges- tellten Ausführungsform.

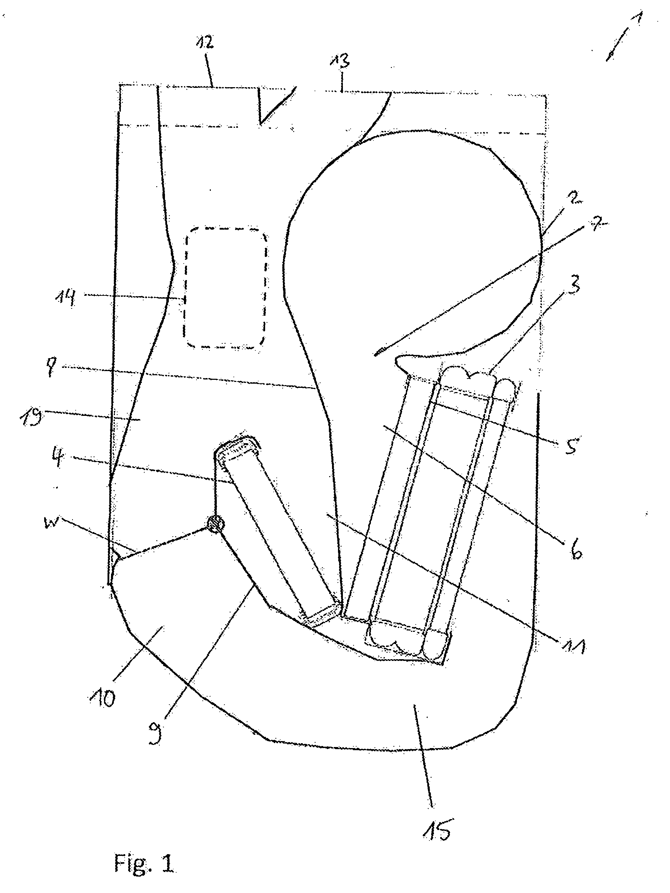

Fig.1 zeigt eine schematische Schnittansicht eines Abschnitts eines Luftführungsgehäuses 1 einer Klimaanlage gemäß einer Ausführungsform. In diesem Abschnitt des Luftführungsgehäuses 1 sind ein Gebläse 2, ein Verdampfer 3, eine elektrische Heizeinrichtung 4 und ein Filter 5 angeordnet. Das Gebläse 2 führt dem Verdampfer 3 einen Luftstrom (nicht dargestellt) zu, welcher über einen ersten Luftströmungsweg 6 geleitet wird. Der erste Luftströmungsweg 6, welcher als Luftführungskanal ausgebildet ist, ist zwischen dem Verdampfer 3 und der Heizeinrichtung 4 angeordnet. Darüber hinaus setzt sich der erste Luftströmungsweg 6 beginnend an einem Luftaustritt 7 des Gebläses zu dem Verdampfer 3 fort. Der Luftzuführkanal weist eine Wandung 8 auf, welche zwischen dem Verdampfer 3 und der Heizeinrichtung 4 angeordnet ist. Eine hinter dem Verdampfer 3 angeordnete Klappe, welche hier als einschenklige Mischklappe ausgebildet ist und im folgenden als zweite Klappe 9 bezeichnet wird, leitet den aus dem Verdampfer 3 austretenden Luftstrom je nach Bedarf bzw. Betriebsmodus in einen Kaltluftkanal 10 und/oder einen Warmluftkanal 11. In dem Luftführungsgehäuse 1 sind weiterhin ein Belüftungsluftaustritt 12, ein Defrostluftaustritt 13 und ein Fußraumluftaustritt 14 vorgesehen, in welche der Kaltluftkanal 10 und der Warmluftkanal 11 münden. Die in der Figur gezeigte Stellung der zweiten Klappe 9 entspricht einer Stellung "kalt", in welcher die Luft über den Kaltluftkanal 10 geleitet wird. In der durch "w" durch die gestrichelte Line gekennzeichneten Stellung der zweiten Klappe 9 wird dagegen die Luft über den Warmluftkanal 11 geleitet. Um eine Verlängerung des Luftströmungswegs vom Luftaustritt 7 des Gebläses 2 bis zum Erreichen der Heizeinrichtung 4 und somit eine bessere Abscheidung von Kondenswasser vor Erreichen der Heizeinrichtung 4 zu erreichen, erfolgt eine Zuströmung) des Luftstroms über einen zweiten Luftströmungsweg 15 unter dem Verdampfer 3 zu der Heizeinrichtung 4 und der Kaltweg, das heißt die Lufströmung, wenn sich die Mischklappe in der Stellung "kalt" befindet, wird unter der Heizeinrichtung 4 her geleitet.

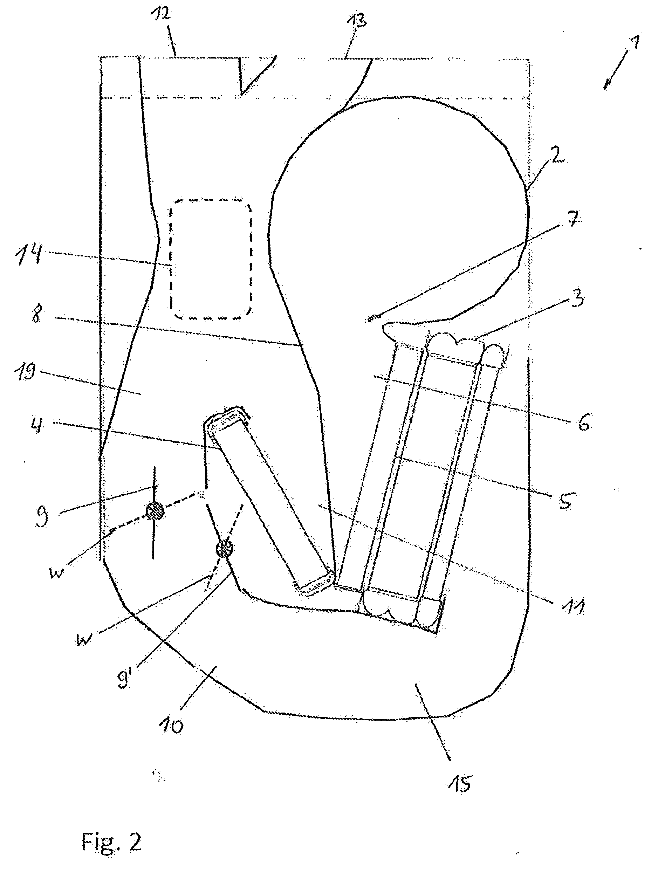

Fig. 2 zeigt ehe schematische Schnittansicht eines Abschnitts eines Luftführungsgehäuses 1 einer Klimaanlage gemäß einer weiteren Ausführungsform. Im Gegensatz zu der in Fig. 1 dargestellten Ausführungsform sind hier zwei zweite Klappen 9, 9' vorgesehen, Welche den aus dem Verdampfer 3 austretenden Luftstrom in den Kaltluftkanal 10 oder den Warmluftkanal 11 leiten. Die in Fig. 2 gezeigte Stellung der beiden zweiten Klappen 9, 9' entspricht einer Stellung "kalt" und die durch die gestrichelte Linie "w" angedeutete Stellung der beiden zweiten Klappen 9, 9' entspricht einer Stellung "warm". Die Zuströmung des Luftstroms vom Verdampfer 3 zu der Heizeinrichtung 4 ist analog zu der bereits in Zusammenhang mit Fig. 1 beschriebenen,

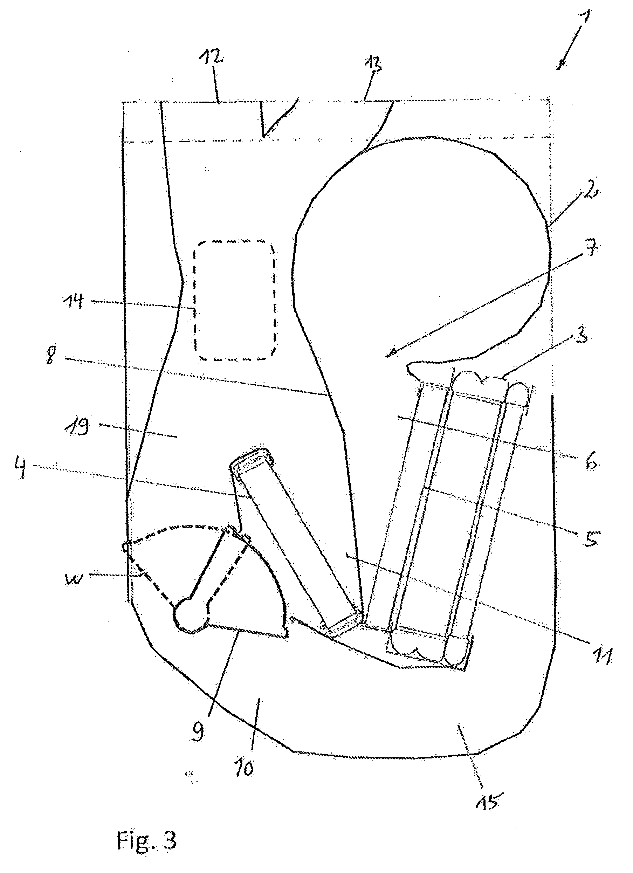

Fig. 3 zeigt eine schematische Schnittansicht eines Abschnitts eines Luftführungsgehäuses 1 einer Klimaanlage gemäß noch einer weiteren Ausführungsform. Wiederum unterscheidet sich die hier dargestellte Ausführungsform von der bereits in Zusammenhang mit Fig. 1 beschriebenen lediglich dadurch, dass die zweite Klappe 9 hier als sogenannte Barrel Door Mischklappe ausgebildet ist. Wiederum ist die zweite Klappe 9 in einer Stellung "kalt" eingezeichnet, wobei durch die gestrichelte Line, welche durch "w" gekennzeichnet ist, die Stellung "warm" angedeutet ist.

Fig, 4 zeigt eine schematische Schnittansicht eines Abschnitts eines Luftführungsgehäuses 1 einer Klimaanlage gemäß noch eher weiteren Ausführungsform. Hierbei ist zwar die in Fig. 3 dargestellte Barrel Door Mischklappe als zweite Klappe 9 eingesetzt worden, die Anordnung der Heizeinrichtung 4 bezüglich der zweiten Klappe 9 unterscheidet sich jedoch von den, vorherigen Ausführungsformen, welche in Fig. 1 bis Fig. 3 dargestellt sind. Hierbei erfolgt wiederum die Zuströmung des Luftstroms über den zweiten Luftströmungsweg 15 unter dem Verdampfer 3 zu der Heizeinrichtung 4. im Gegensatz zu den bereits in Fig. 1 bis Fig. 3 beschriebenen Ausführungsformen wird jedoch der Kaltweg, das heißt die Lufströmung, wenn sich die Mischklappe in der Stellung "kalt" befindet, über der Heizeinrichtung 4 her geleitet.

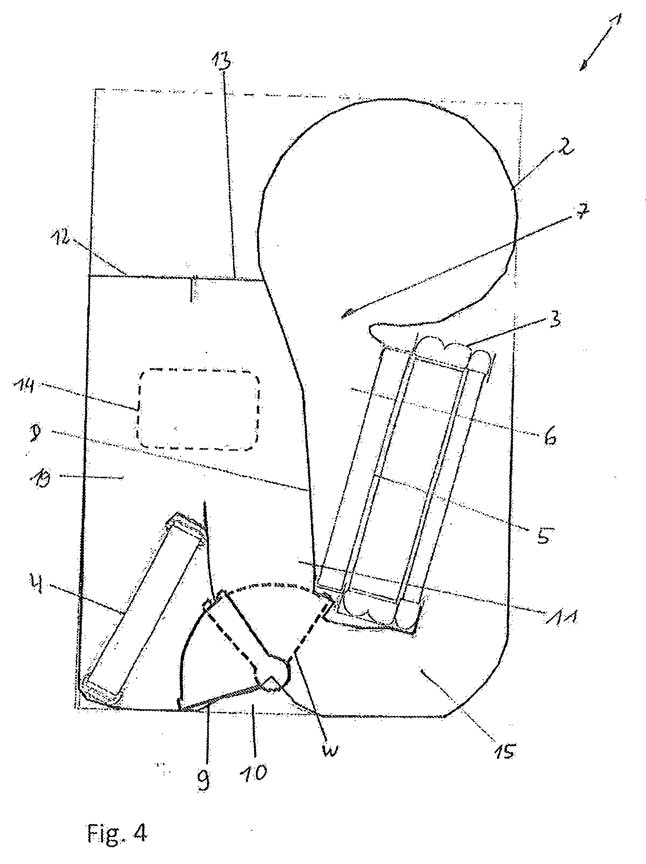

Fig, 5 zeigt eine schematische Schnittansicht eines Abschnitts eines Luftführungsgehäuses 1 einer Klimaanlage gemäß noch einer weiteren Ausführungsform, welche sich von der in Fig. 4 gezeigten Ausführungsform dadurch unterscheidet, dass die Zuströmung des Luftstroms über einen dritten Luftströmungsweg 16, weicher über dem Verdampfer 3 verläuft, zu der Heizeinrichtung 4 erfolgt.

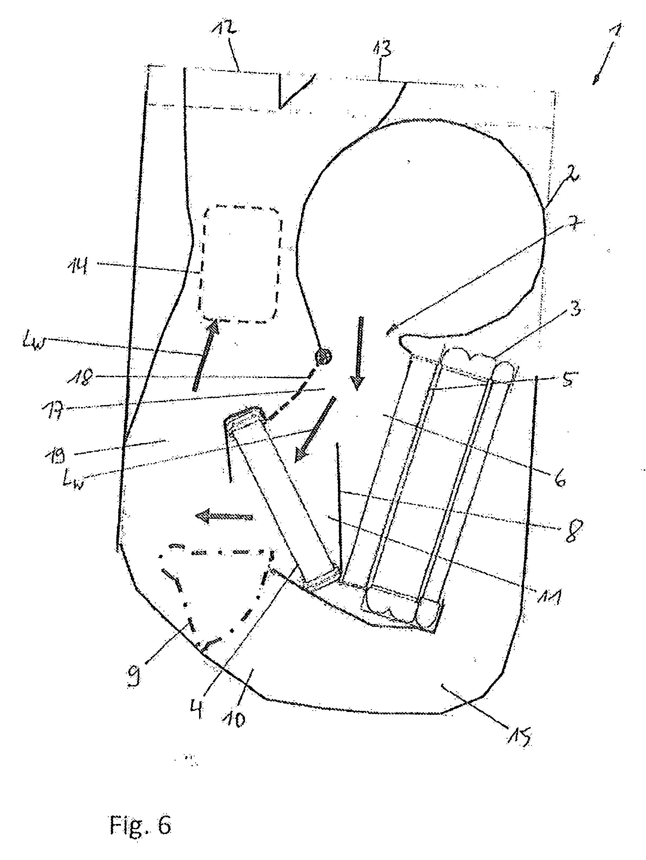

Fig. 6 zeigt eine schematische Schnittansicht eines Abschnitts eines Luftführungsgehäuses 1 einer Klimaanlage gemäß noch einer weiteren Ausführungsform, Der Aufbau und die Komponenten dieser Ausführungsform entsprechen im Wesentlichen der in Fig. 3 gezeigten Ausführungsform Der Unterschied zu der Ausführungsform von Fig. 3 ist jedoch, dass in der Wandung 8 eine Öffnung 17 vorgesehen ist, weiche durch eine einfache, in der Öffnung 17 angeordnete erste Kappe 18 verschließbar. Die erste Klappe 18 ist zwischen dem ersten Luftströmungsweg 6 und dem Warmluftkanal 11 angeordnet. Wenn die erste Klappe 18 ganz geöffnet ist, wie in der Figur dargestellt, wird der Verdampfer 3 nicht mehr von der von dem Gebläse, 2 kommenden Lufströmung L_{w} durchströmt. Die Lufströmung im Betriebsmodus "maximal warm" wird direkt durch die Heizeinrichtung 4 geleitet, wobei es zu einem deutlich reduziertem luftseitigen Druckabfall kommt.

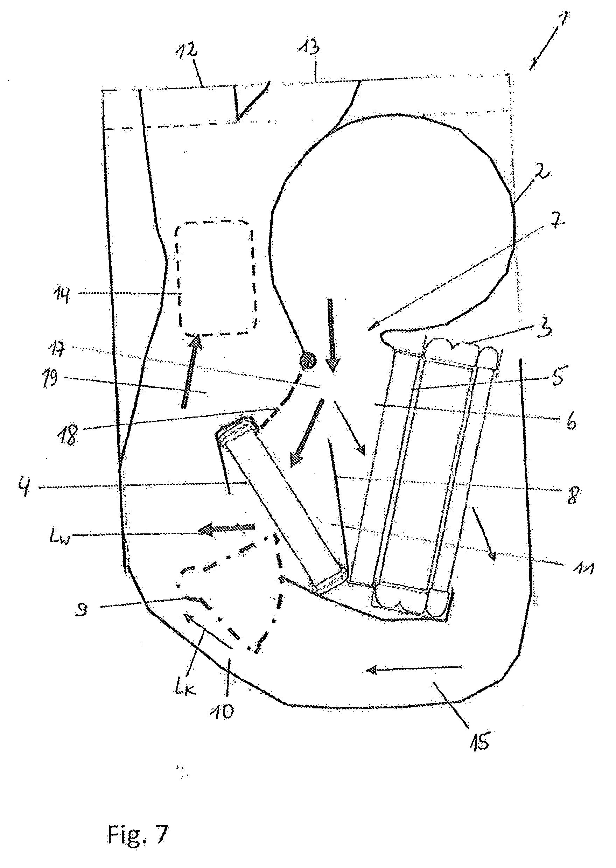

Fig. 7 zeigt eine weitere schematische Schnittansicht des Abschnitts des Luftführungsgehäuses 1 der Klimaanlage von Fig. 6, welche hier nicht im Modus "maximal warm" sondern im Mischbetrieb arbeitet. Wie durch die Pfeile L_{w} gekennzeichnet, wird ein vom Gebläse 2 kommender Luftstrom durch die Heizeinrichtung 4 geleitet und dort erwärmt Ein Teil des vom Gebläse 2 kommenden Luftstroms wird an dem Verdampfer 3 vorbei zum Kaltluftkanal 10 geleitet. In einem Mischraum 19 an der zweiten Klappe 9 werden der Kaltluftstrom und der Warmluftstrom dann gemischt und gemeinsam zu entweder dem Belüftungsluftaustritt 12, dem Defrostluftaustritt 13 oder dem Fußraumluftaustritt 14 weitergeleitet.

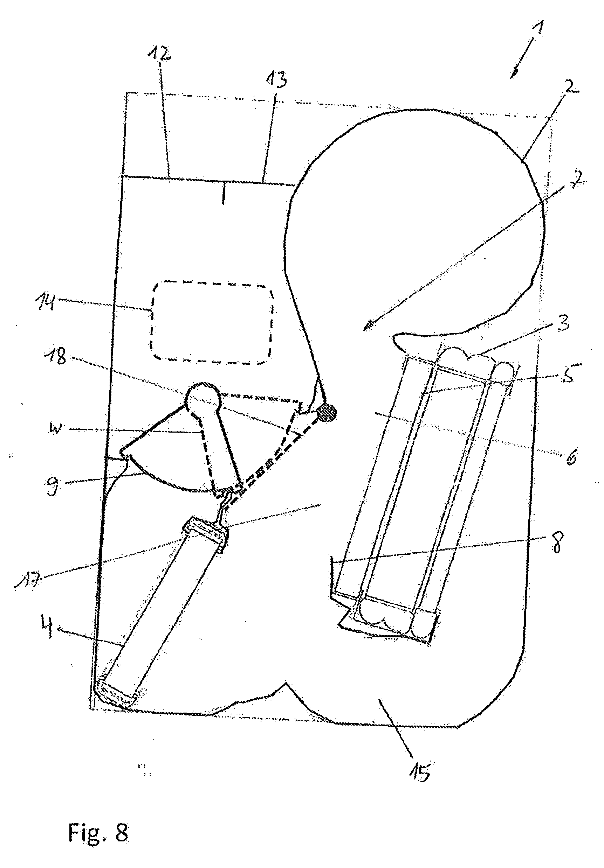

Fig. 8 zeigt eine schematische Schnittansicht eines Abschnitts eines Luftführungsgehäuses 1 einer Klimaanlage gemäß, noch einer weiteren Ausführungsform, Im Unterschied zu der in Fig. 7 gezeigten Ausführungsform ist die zweite Klappe 9 nicht hinter der Heizeinrichtung 4 sondern oberhalb davon angeordnet,

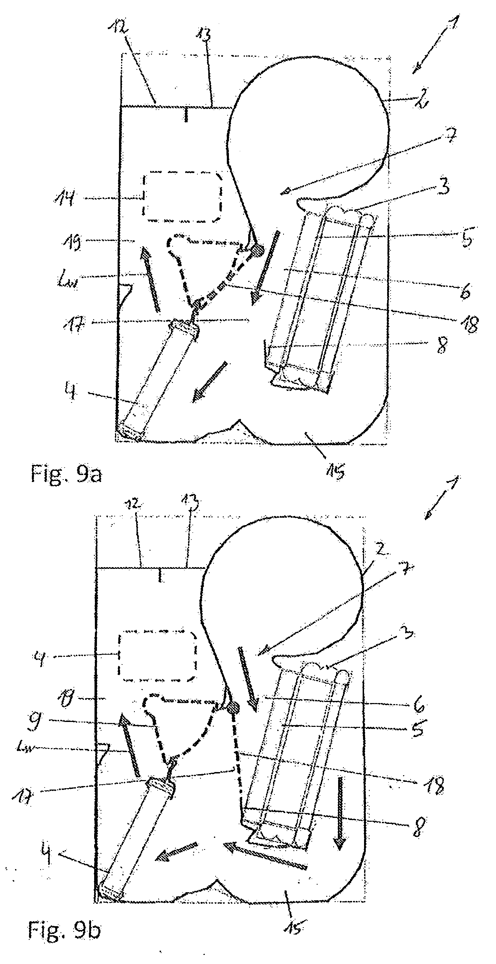

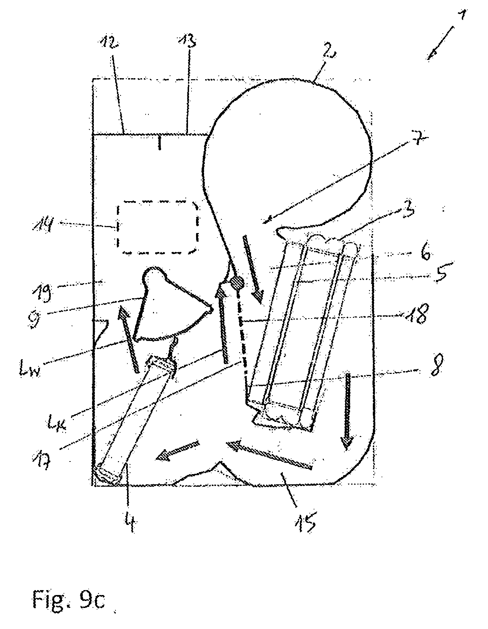

Fig. 9a, 9b, 9c zeigen jeweilige schematische Schnittansichten der in Fig. 8 gezeigten Ausführungsform in verschiedenen Betriebsmodi. In Fig. 9a ist dabei ein Betriebsmodus "maximal warm" dargestellt, wobei die vom Gebläse 2 kommende Luftströmung am Verdampfer 3 vorbei geleitet wird bzw. diesen umgeht und direkt zu der Heizeinrichtung 4 geleitet wird, wobei die Luft beim Durchlaufen der Heizeinrichtung 4 erwärmt wird. In Fig. 9b ist ein Betriebsmodus "maximal warm" bei gleichzeitigem Entfeuchtungsbetrieb dargestellt Die vom Gebläse 2 kommende Luftströmung wird durch den Verdampfer 3 über den unter dem Verdampfer 3 hergeleiteten verlängerten Strömungsweg - den zweiten Luftströmungsweg 15 - zu der Heizeinrichtung 4 geleitet, wobei die entfeuchtete Luft beim Durchlaufen der Heizeinrichtung 4 erwärmt wird und je nach Bedarf dem. Belüftungsluftaustritt 12, dem Defrostluflaustritt 13 oder dem Fußraumluftaustritt 14 zugeführt wird. Schließlich zeigt Fig. 9c einen Betriebsmodus, in welchem der Verdampfer zur Entfeuchtung der Luftströmung durchströmt wird und die über den Zweiten Luftströmungsweg 15 geleitete Luft dann auf den Kaltluftkanal 10 und den Warmluftkanal 11 aufgeteilt wird,

Insgesamt betrachtet kann mit der erfindungsgemäßen Klimaanlage eine bauraumsparende Konfiguration bereitgestellt werden, mit der ein Druckabfall im Heizbetrieb sowie ein Verdampfen von möglicherweise aus dem Verdampfer abgeschiedenen Kondenswasser an der Heizeinrichtung effektiv vermieden werden kann.

### Bezugszeichenliste

- 1: Luftführungsgehäuse
- 2: Gebläse
- 3: Verdampfer
- 4: Heizeinrichtung
- 5: Filter
- 6: erster Luftströmungsweg
- 7: Luftaustritt
- 8: Wandung
- 9, 9': zweite Klappe
- 10: Kaltluftkanal
- 11: Warmluftkanal
- 12: Belüftungsluftaustritt
- 13: Defrostluftaustritt
- 14: Fußraumluftaustritt
- 15: zweiter Luftströmungsweg
- 16: dritter Luftströmungsweg
- 17: Öffnung
- 18: erste Klappe
- 19: Mischraum
- w: Stellung "wann"
- L_{w}: Luftströmung, warm
- L_{K}: Luftströmung, kalt

## Patentansprüche

1. Klimaanlage, insbesondere für ein Kraftfahrzeug, welche ein Luftführungsgehäuse (1) aufweist, in welchem zumindest ein Gebläse (2), ein Verdampfer (3) und eine Heizeinrichtung (4) angeordnet sind, wobei das Gebläse (2) dem Verdampfer (3) und/oder der Heizeinrichtung (4) einen Luftstrom zuführt, wobei der Verdampfer im Wesentlichen vertikal angeordnet ist und der Luftstrom etwa horizontal den Verdampfer durchströmt, wobei der Luftstrom danach etwa U-förmig die Anlage durchströmt und oberhalb von Verdampfer und Heizeinrichtung die Anlage verlässt, **dadurch gekennzeichnet, dass** ein erster Luftströmungsweg (6) zum Zuführen des Luftstroms entweder zu dem Verdampfer (3) oder parallel zum Verdampfer (3) und zur Heizeinrichtung (4) zwischen dem Verdampfer (3) und der Heizeinrichtung (4) angeordnet ist und ein zweiter Luftströmungsweg (15) von der Luftaustrittsseite des Verdampfers (3) zu der Heizeinrichtung (4) unterhalb des Verdampfers (3) angeordnet ist oder neben dem Verdampfer oder oberhalb des Verdampfers (3) angeordnet ist.

2. Klimaanlage nach Anspruch 1, **dadurch gekennzeichnet, dass** der erste Luftströmungsweg (6) an einem Luftaustritt (7) des Gebläses (2) angeordnet ist.

3. Klimaanlage nach Anspruch 1 oder 2, **dadurch gekennzeichnet, dass** der erste Luftströmungsweg (6) als Luftzuführkanal in dem Luftführungsgehäuse (1) ausgebildet ist.

4. Klimaanlage nach Anspruch 3, **dadurch gekennzeichnet, dass** der Luftzuführkanal eine Wandung (8) aufweist, welche zwischen dem Verdampfer (3) und der Heizeinrichtung (4) angeordnet ist.

5. Klimaanlage nach Anspruch 4, **dadurch gekennzeichnet, dass** in der Wandung (8) eine Öffnung (17) vorgesehen ist.

6. Klimaanlage nach Anspruch 5, **dadurch gekennzeichnet, dass** in der Öffnung (17) eine erste Klappe (18) zum Öffnen und Verschließen der Öffnung (17) angeordnet ist.

7. Klimaanlage nach Anspruch 6, **dadurch gekennzeichnet, dass** die erste Klappe (18) eine Reihenschaltung oder eine Parallelschaltung des Verdampfers (3) und der Heizeinrichtung (4) bezüglich des durch den ersten Luftströmungsweg (6) zugeführten Luftstroms regelt.

8. Klimaanlage nach Anspruch 7, **dadurch gekennzeichnet, dass** in der Reihenschaltung der Luftstrom von dem ersten Luftströmungsweg (6) ausschließlich zu dem Verdampfer (3) geleitet wird.

9. Klimaanlage nach einem oder mehreren der Ansprüche 1 bis 8, **dadurch gekennzeichnet, dass** eine hinter dem Verdampfer (3) angeordnete zweite Klappe (9) den aus dem Verdampfer (3) austretenden Luftstrom in einen Kaltluftkanal (10) und/oder einen Warmluftkanal (11) leitet.

10. Klimaanlage nach Anspruch 9, **dadurch gekennzeichnet, dass** die zweite Klappe (9) als Mischklappe ausgebildet ist.

11. Klimaanlage nach Anspruch 9, **dadurch gekennzeichnet, dass** eine Luftaustrittsseite des Verdampfers (3) durch die zweite Klappe (9) verschließbar ist.

12. Klimaanlage nach einem der Ansprüche 1 bis 11, **dadurch gekennzeichnet, dass** die Heizeinrichtung (4) eine elektrische Heizeinrichtung ist.

## Claims

1. An air conditioning device, in particular for a motor vehicle, comprising an air conduction housing (1) in which at least one fan (2), an evaporator (3) and a heating unit (4) are arranged, the fan (2) supplying an air stream to the evaporator (3) and/or the heating unit (4), the evaporator being arranged essentially vertically, and the air stream flowing through the evaporator approximately horizontally, the air stream then flowing through the device in an approximately U-shaped manner and leaving the device above the evaporator and heating unit, **characterized in that** a first air flow path (6) for supplying the air stream either to the evaporator (3), or parallel to the evaporator (3) and to the heating unit (4), is arranged between the evaporator (3) and the heating unit (4), and a second air flow path (15) from the air outlet side of the evaporator (3) to the heating unit (4) is arranged below the evaporator (3) or is arranged next to the evaporator or above the evaporator (3).

2. The air conditioning device according to claim 1, **characterized in that** the first air flow path (6) is arranged on an air outlet (7) of the fan (2).

3. The air conditioning device according to claim 1 or 2, **characterized in that** the first air flow path (6) is designed as an air supply duct in the air conduction housing (1).

4. The air conditioning device according to claim 3, **characterized in that** the air supply duct comprises a wall (8), which is arranged between the evaporator (3) and the heating unit (4).

5. The air conditioning device according to claim 4, **characterized in that** an opening (17) is provided in the wall (8).

6. The air conditioning device according to claim 5, **characterized in that** a first damper (18) for opening and closing the opening (17) is arranged in the opening (17).

7. The air conditioning device according to claim 6, **characterized in that** the first damper (18) controls a series connection or a parallel connection of the evaporator (3) and the heating unit (4) with respect to the air stream that is supplied through the first air flow path (6).

8. The air conditioning device according to claim 7, **characterized in that**, in the series connection, the air stream is conducted from the first air flow path (6) exclusively to the evaporator (3).

9. An air conditioning device according to one or more of claims 1 to 8, **characterized in that** a second damper (9) arranged downstream of the evaporator (3) conducts the air stream exiting the evaporator (3) into a cold air duct (10) and/or a warm air duct (11).

10. The air conditioning device according to claim 9, **characterized in that** the second damper (9) is designed as a blending damper.

11. The air conditioning device according to claim 9, **characterized in that** an air outlet side of the evaporator (3) can be closed by the second damper (9).

12. An air conditioning device according to any one of claims 1 to 11, **characterized in that** the heating unit (4) is an electric heating unit.

## Revendications

1. Système de climatisation, en particulier pour un véhicule automobile, qui présente un carter de guidage d'air (1) dans lequel sont disposés au moins un pulseur (2), un évaporateur (3) et un dispositif de chauffage (4), où le pulseur (2) fournit un flux d'air à l'évaporateur (3) et/ou au dispositif de chauffage (4), où l'évaporateur est disposé pratiquement de façon verticale, et le flux d'air traverse l'évaporateur de façon à peu près horizontale, où le flux d'air traverse ensuite le système suivant une trajectoire à peu près en forme de U et sort du système en amont de l'évaporateur et du dispositif de chauffage, **caractérisé en ce qu'**une première trajectoire de circulation d'air (6) servant à fournir le flux d'air soit à l'évaporateur (3), soit parallèlement à l'évaporateur (3) et au dispositif de chauffage (4), est disposée entre l'évaporateur (3) et le dispositif de chauffage (4), et une deuxième trajectoire de circulation d'air (15), partant du côté de la sortie d'air de l'évaporateur (3) et allant jusqu'au dispositif de chauffage (4), est disposée en aval de l'évaporateur (3) ou bien est disposée à proximité de l'évaporateur ou en amont de l'évaporateur (3).

2. Système de climatisation selon la revendication 1, **caractérisé en ce que** la première trajectoire de circulation d'air (6) est disposée au niveau d'une sortie d'air (7) du pulseur (2).

3. Système de climatisation selon la revendication 1 ou 2, **caractérisé en ce que** la première trajectoire de circulation d'air (6) est conçue, dans le carter de guidage d'air (1), comme un conduit d'alimentation d'air.

4. Système de climatisation selon la revendication 3, **caractérisé en ce que** le conduit d'alimentation d'air présente une paroi (8) qui est disposée entre l'évaporateur (3) et le dispositif de chauffage (4).

5. Système de climatisation selon la revendication 4, **caractérisé en ce qu'**il est prévu une ouverture (17) dans la paroi (8).

6. Système de climatisation selon la revendication 5, **caractérisé en ce qu'**un premier volet (18) servant à ouvrir et à fermer l'ouverture (17) est disposé dans l'ouverture (17).

7. Système de climatisation selon la revendication 6, **caractérisé en ce que** le premier volet (18) régule un montage en série ou un montage en parallèle de l'évaporateur (3) et du dispositif de chauffage (4), concernant le flux d'air fourni par la première trajectoire de circulation d'air (6).

8. Système de climatisation selon la revendication 7, **caractérisé en ce que**, dans le montage en série, le flux d'air provenant de la première trajectoire de circulation d'air (6) est dirigé exclusivement jusqu'à l'évaporateur (3).

9. Système de climatisation selon l'une quelconque ou plusieurs des revendications 1 à 8, **caractérisé en ce qu'**un deuxième volet (9) disposé derrière l'évaporateur (3) dirige dans un conduit d'air froid (10) et/ou dans un conduit d'air chaud (11), le flux d'air sortant de l'évaporateur (3).

10. Système de climatisation selon la revendication 9, **caractérisé en ce que** le deuxième volet (9) est conçu comme un volet mélangeur.

11. Système de climatisation selon la revendication 9, **caractérisé en ce qu'**un côté de la sortie d'air de l'évaporateur (3) peut être fermé par le deuxième volet (9).

12. Système de climatisation selon l'une quelconque des revendications 1 à 11, **caractérisé en ce que** le dispositif de chauffage (4) est un dispositif de chauffage électrique.
